(19) **Europäisches Patentamt**

**European Patent Office**

**Office européen des brevets**

(11) **EP 0 635 784 B1**

(12) **EUROPÄISCHE PATENTSCHRIFT**

(45) Veröffentlichungstag und Bekanntmachung des Hinweises auf die Patenterteilung:
**25.08.1999 Patentblatt 1999/34**

(51) Int Cl.[6]: **G06F 9/46**

(21) Anmeldenummer: **94110145.3**

(22) Anmeldetag: **29.06.1994**

(54) **Multiprozessorsystem**

Multiprocessorsystem

Système multiprocesseur

(84) Benannte Vertragsstaaten:
**AT BE CH DE DK ES FR GB IT LI NL SE**

(30) Priorität: **23.07.1993 DE 4324852**

(43) Veröffentlichungstag der Anmeldung:
**25.01.1995 Patentblatt 1995/04**

(73) Patentinhaber: **SIEMENS AKTIENGESELLSCHAFT**
**80333 München (DE)**

(72) Erfinder:
- **Matz, Christine, Dipl.-Phys.**
  **D-81379 München (DE)**
- **Petersen, Volker**
  **D-81379 München (DE)**
- **Schoen, Hans-Ulrich, Dr. rer. nat.**
  **D-82067 Ebenhausen (DE)**
- **Siegwart, Bernd, Dipl.-Phys.**
  **D-86833 Ettringen (DE)**

(56) Entgegenhaltungen:
**EP-A- 0 330 836**

- **IEEE 1989 NATIONAL AEROSPACE AND ELECTRONICS CONFERENCE NAECON, 22. Mai 1989, DAYTON, OH, US Seiten 1813 - 1818 M.S.ROTTMAN ET AL. 'The AMCAD Real-Time Multiprocessor Operating System'**
- **COMPUTER ARCHITECTURE NEWS, Bd.17, Nr.2, April 1989, NEW YORK US Seiten 64 - 75 J.R.GOODMAN ET AL. 'Efficient Synchronization Primitives for Large-Scale Cache-Coherent Multiprocessors'**
- **IBM TECHNICAL DISCLOSURE BULLETIN, Bd.32, Nr.6B, November 1989, NEW YORK US Seiten 241 - 245 'Mapped Static Allocation for Parallel Subprograms'**
- **PATENT ABSTRACTS OF JAPAN vol. 7, no. 150 (P-207) 30. Juni 1983 & JP-A-58 060 357 (HITACHI) 9. April 1983**
- **IBM TECHNICAL DISCLOSURE BULLETIN, Bd.34, Nr.8, Januar 1992, NEW YORK US Seiten 33 - 34 'Barrier Synchronization Using Fetch-And-Add And Broadcast'**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

In einem als Beispiel für ein Multiprozessorsystem dienenden Vermittlungssytem muß in bestimmten Situationen ein Aufgabenpaket möglichst schnell ausgeführt werden. Einige Aufgaben des Aufgabenpakets sind hierbei voneinander abhängig, d. h. eine Nachfolgeaufgabe baut auf das Ergebnis einer vorher abgearbeiteten Aufgabe auf, andere Aufgaben hingegen sind total unabhängig voneinander.

Ein Beispiel hierfür ist bei einem Vermittlungssystem die Intitialisierung transienter vermittlungstechnischer Daten nach einem System-Recovery (Neuoder Wiederanlauf). Hierbei müssen z. B. zuerst transiente port-bezogene Daten anhand von aktuellen Systemdaten aktualisiert bzw. initialisiert werden, bevor Freibänder für Verbindungsleitungen aufgebaut werden können. Andere Wiederanlaufaufgaben, wie z. B. die Initialisierung von Verkehrsmeßtabellen, können hingegen völlig unabhängig von anderen Aufgaben durchgeführt werden.

Die Größe und damit auch die Laufzeit der einzelnen Aufgaben ist für einige Aufgaben bekannt, für andere Aufgaben jedoch stark von der aktuellen Systemkonfiguration abhängig und damit schwer oder gar nicht voherbestimmbar. Solche Abhängigkeiten können die Größe des Gesamtsystems, oder der momentane Systemzustand, z. B. bezüglich ausgefallener Komponenten, sein.

Der Erfindung liegt die Aufgabe zugrunde, in einem Multiprozessorsystem mit gemeinsam genutztem Datenspeicherbereich (Common Memory) eine optimale Nutzung aller zur Verfügung stehender Prozessoren zur schnellstmöglichen Abarbeitung eines Aufgabenpakets zu gewährleisten.

Diese Aufgabe wird durch die Merkmale des Anspruchs 1 gelöst.

Durch die Merkmale des Anspruchs 1 wird sichergestellt, daß einerseits die Abarbeitung voneinander abhängiger Einzelaufgaben koordiniert wird, andererseits aber kein Prozessor des Multiprozessorsystems sich unnötig in einem Wartezustand ohne Einzelaufgabe befindet.

Eine weitere Ausgestaltung der Erfindung ist durch Anspruch 2 angegeben. Durch diese Ausgestaltung wird erreicht, daß das scheduling an den Synchronisationspunkten von den Prozessoren eigentständig durchgeführt wird, wobei jeder Prozessor dabei gleichberechtigt ist. Eine Sonderstellung besitzt lediglich ein sogenannter Master-Prozessor, der eine zeitliche Überwachung an einem Synchronisationspunkt durchführt.

Eine weitere Ausgestaltung der Erfindung ist durch Anspruch 3 angegeben. Durch diese Ausgestaltung können besonders große Einzelaufgaben in Teilaufgaben unterteilt und in paralleler Weise von verschiedenen Prozessoren durchgeführt werden.

Eine weitere Ausgestaltung der Erfindung ist durch Anspruch 4 angegeben. Durch diese Ausgestaltung wird während der Abarbeitung eine optimale Aufteilung und damit Nutzung der zur Verfügung stehenden Rechnerkapazität in Abhängigkeit von der Größe einer in Teilaufgaben zu unterteilenden Parallel-Prozedur erzielt.

Eine weitere Ausgestaltung der Erfindung ist durch Anspruch 5 angegeben. Durch diese Ausgestaltung wird gewährleistet, daß auch bei Ausfall eines eine Einzelaufgabe ausführenden Prozessors selbst im ungünstigsten Fall nur eine minimale Verzögerung in der Abarbeitung des Aufgabenpakets eintritt.

Im folgenden wird die Erfindung anhand eines Ausführungsbeispiels unter Zuhilfenahme der Zeichnung näher beschrieben.

Figur 1 zeigt die Struktur einer erfindungsgemäßen Aufgabensteuerungstabelle,
Figur 2 zeigt eine erfindungsgemäße Prozessortabelle.

Bei dem Ausführungsbeispiel wird davon ausgegangen, daß es sich bei dem Aufgabenpaket um ein Paket zur Initialisierung eines Multiprozessorsystems bei einem Neu- oder Wiederanlauf handelt.

Um die parallele Initialisierung eines Multiprozessorsystems zu ermöglichen, ist das gesamte Aufgabenpaket zur Initialisierung in Einzelaufgaben unterteilt, die statisch in einer Aufgabensteuerungstabelle aufgelistet sind. Voneinander unabhängige Einzelaufgaben sind dabei in Blöcke zusammengefaßt, die parallel abgearbeitet werden können, während voneinander abhängige Aufgaben durch Synchronisationspunkte getrennt sind. Zu jeder Einzelaufgabe ist des weiteren eingetragen, ob sie schon ausgeführt, in Arbeit oder frei, d. h. noch abzuarbeiten ist.

Die Abarbeitung aller Einzelaufgaben erfolgt im Multiprozessorbetrieb, d. h. in paralleler Weise auf allen Prozessoren. Dabei werden die Einzelaufgaben nicht nach einem starren Prinzip den einzelnen Prozessoren zugeteilt, sondern jeder aktive Prozessor holt sich selbständig die nächste freie Einzelaufgabe aus der Aufgabensteuerungstabelle zur Bearbeitung. Gleichzeitig wird sie als "in Arbeit" in der Aufgabensteuerungstabelle markiert und nach ihrer Beendigung entsprechend als "ausgeführt".

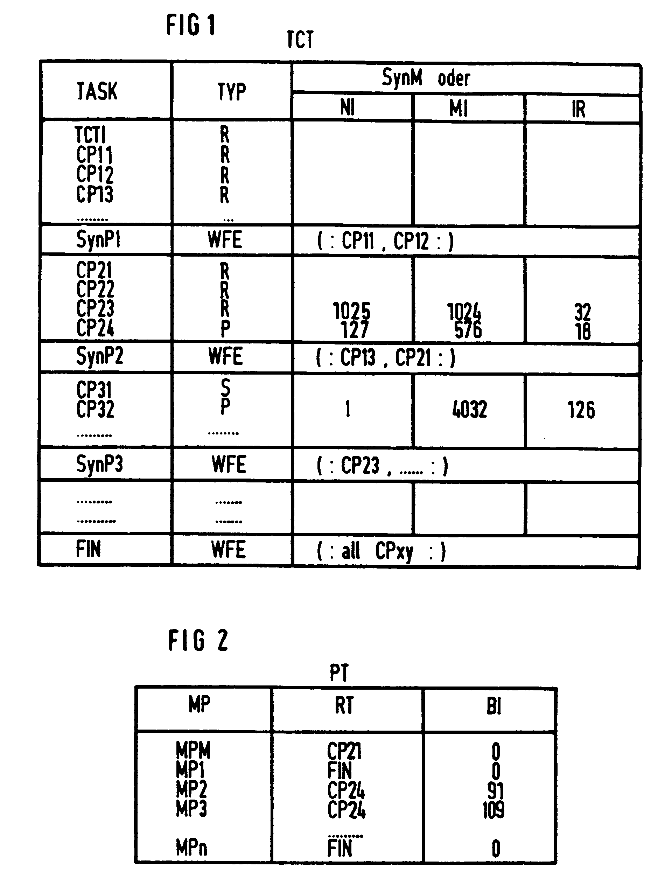

Figur 1 zeigt die Struktur einer erfindungsgemäßen Aufgabensteuerungstabelle TCT sowie deren Inhalt zu einem bestimmten Zeitpunkt der Abarbeitung des Aufgabenpaketes. Die Aufgabensteuerungstabelle enthält eine erste Spalte TASK, in der Einzelaufgaben CPxy, d. h. Prozeduren zur Abarbeitung der Einzelaufgaben aufgelistet sind. Das Prinzip zur Durchführung der Abarbeitung ist sehr einfach. Jeder Prozessor schaut in die Aufgabensteuerungstabelle, entnimmt daraus die nächste freie Prozedur, führt diese aus und geht weiter zu der nächsten Prozedur, die frei ist.

Es gibt zwei Arten von Prozeduren, nämlich solche, die absolut parallel ablaufen können und solche, die voneinander abhängen und deshalb nicht parallel ablaufen können. Als Beispiel für abhängige Prozeduren können z. B. zwei Prozeduren genannt werden, die auf dieselben Daten zugreifen, oder zwei Prozeduren, bei denen die eine Prozedur beendet sein muß, bevor die andere aufgerufen werden darf.

Um wegen des Vorhandenseins von abhängigen Prozeduren die korrekte Aufruffolge der Prozeduren CPxy zu gewährleisten, enthält die Aufgabensteuerungstabelle sogenannte Synchronisierungspunkte SynP. Jeder Synchronisierungspunkt ist durch eine Parameterliste repräsentiert, die im folgenden als Synchronisiermaske SynM bezeichnet wird. Bei der Synchronisiermaske handelt es sich um eine Datenstruktur, die die Namen derjenigen Prozeduren enthält, die an diesem Synchronisationspunkt beendet sein müssen. Sobald ein Prozessor einen Synchronisationspunkt erreicht, muß er warten, bis die Ausführung aller in der Synchronisiersmaske angegebenen Prozeduren beendet ist.

Alle Prozeduren innerhalb eines Blocks zwischen zwei Synchronisationspunkten können parallel ausgeführt werden.

Beim Entwurf der Aufgabensteuerungstabelle muß nur die Laufzeit der unterschiedlichen Prozeduren berücksichtigt werden. Da die Prozeduren der Aufgabensteuerungstabelle hinsichtlich der Reihenfolge von oben nach unten entnommen werden, muß nur beachtet werden, daß Prozeduren mit einer längeren Laufzeit an den Anfang eines Blocks gestellt werden, insbesondere wenn sie in der darauffolgenden Synchronisiermaske enthalten sind. Dadurch wird ein unnötiges Warten an einem Synchronisationspunkt vermieden.

Die Aufgabensteuerungstabelle TCT wird nicht nur statisch, sondern auch dynamisch initialisiert. Zur Durchführung der dynamischen Initialisierung enthält die Aufgabensteuerungstabelle eine Tabelleninitialisierungsprozedur TCTI, die die erste Einzelaufgabe des abzuarbeitenden Aufgabenpaketes in der Aufgabensteuerungstabelle darstellt.

Die Prozeduren (Einzelaufgaben) werden, wie bereits erwähnt, aus der Aufgabensteuerungstabelle nacheinander entnommen, wobei oben mit der Tabelleninitialisierungsprozedur TCTI begonnen wird und wobei die Einzelaufgaben durch verschiedene Prozessoren ausgeführt werden. Der Vorgang des Suchens nach einer noch freien Einzelaufgabe wird durch eine Schleife über alle Einzelaufgaben realisiert. Dazu ist eine Schleifenvariable als eine lokale Datenstruktur in jedem Prozessor deklariert. Es wird also keine entsprechende Datenstruktur im gemeinsamen Speicher benützt, um eine Information über die nächste freie Einzelaufgabe zu erhalten. Der Grund hierfür liegt darin, daß nach dieser Methode im Unterschied zu einer gemeinsamen Schleifenvariable kein spezieller Mechanismus notwendig ist, um das Datum der Schleifenvariable gegen parallelen Zugriff zu schützen. Ein kleiner Nachteil der gewählten Methode liegt darin, daß jeder Prozessor während des Suchens unter Umständen mehrere Male auf eine schon von einem anderen Prozessor bearbeitete Einzelaufgabe stößt, bevor er die nächste freie Einzelaufgabe erhält. Dies bedeutet jedoch nur einen vernachlässigbaren Verlust an Dynamik.

Jede Einzelaufgabe ist durch eine Typangabe näher bestimmt, die in einer zweiten Spalte der Aufgabensteuerungstabelle mit dem Namen "TYP" angegeben ist.

Prozeduren vom Typ S werden seriell, d. h. durch jeweils einen einzigen Prozessor abgearbeitet. Sie haben eine relativ kurze Laufzeit. Der Eintrag S in der Typ-Spalte der Aufgabensteuerungstabelle signalisiert gleichzeitig, daß diese Prozedur noch unbearbeitet ist. Sobald eine solche Prozedur von einem Prozessor abgeholt wird, wird gleichzeitig der Eintrag S durch den Eintrag R ersetzt. Dadurch wird nachfolgenden Prozessoren signalisiert, daß diese Prozedur "in Ausführung bzw. erledigt" ist und jeder andere Prozessor diese Prozedur überspringen muß.

Prozeduren (Einzelaufgaben) vom Typ P haben eine lange Laufzeit. Aus diesem Grund können sie mehrmals mit unterschiedlichen Parameterwerten aufgerufen werden und somit in paralleler Weise auf verschiedenen Prozessoren ausgeführt werden. Im folgenden werden Prozeduren vom Typ P als Parallel-Prozeduren bezeichnet. Jede Parallel-Prozedur enthält eine Schleife über mehrere Bereiche von Datenelementen, die Stück für Stück initialisiert werden. Eine Parallel-Prozedur wird mit einem aktuellen Startindex NI und einem Endindex als Schnittstellenparameter aufgerufen. Die hierzu notwendigen Werte der genannten Indizes sind aus der Aufgabensteuerungstabelle entnehmbar, in der für eine Prozedur vom Typ P eine Spalte für den Startindex NI, eine weitere Spalte für einen Maximalindex MI und schließlich eine weitere Spalte für einen Indexbereich IR (Bereichsparameter) enthalten ist.

Unter dem Maximalindex MI ist jeweils die absolute Zahl von Datenelementen, die mit der Parallel-Prozedur initialisiert werden, abgespeichert.

Der Indexbereich IR bestimmt die relative Zahl von Datenelementen, die in einen einzigen Stück initialisiert werden, d. h. von einem einzigen Prozessor.

Der Maximalindex MI und der Indexbereich IR werden während der dynamischen Initialisierung der Aufgabensteuerungstabelle durch eine Tabelleninitialisierungsprozedur TCTI ermittelt. Dabei erhält die Tabelleninitialisierungsprozedur den Maximalindex entweder durch Importieren der entsprechenden Systemvariable oder durch den Aufruf einer entsprechenden Unterprozedur. Den Indexbereich IR ermittelt die Tabelleninitialisierungsprozedur durch folgenden Formel:

$$IR = MI/ (8 * No)$$

wobei mit No die Anzahl aller aktiven Prozessoren bezeichnet ist. Die obengenannte Formel ergibt sich aus der Überlegung, daß die Anzahl der Aufrufe einer Parallel-Prozedur so gut wie möglich auf die Anzahl der aktiven Prozessoren abgestimmt sein muß. Die obengenannte Formel ist daher so gewählt, daß die Anzahl der Aufrufe achtmal größer als die Anzahl der aktiven Prozessoren ist. Dies gewährleistet, daß alle aktiven Prozessoren mit der Durchführung einer Teilaufgabe der Parallel-Prozedur beschäftigt sind und vermeidet unnötige Leerzeiten. In Figur 1 ist die Anzahl aller aktiven Prozessore gleich vier, weshalb sich bei einem Maximalindex von beispielsweise 1024 ein Bereichsparameter (Indexbereich) von 32 ergibt.

Der Startindex NI bestimmt den Beginn des bei dem nächsten Aufruf der Parallel-Prozedur zu bearbeitenden Datenbereichs. Der Endindex wird durch Summation des Wertes für den Startindex und den Indexbereich berechnet. Nach der statischen Initialisierung der Aufgabensteuerungstabelle hat der Startindex immer den Initialisierungswert "1".

Jedesmal, wenn ein Prozessor die Information für den Aufruf einer Parallel-Prozedur aus der Aufgabesteuerungstabelle abholt, erhöht er den Startindex durch den Wert des Indexbereichs IR, der dann den neuen Startindex für den nächsten aufrufenden Prozessor darstellt. Bei dem letztmaligen Aufruf der Parallel-Prozedur hat der Wert des Endindexes schließlich den Wert "(Maximalindex +1)". Nach dem letztmaligen Aufruf sind damit alle Teilaufgaben dieser Parallel-Prozedur von den Prozessoren ausgeführt worden, und der momentane Eintrag P für die genannte Parallel-Prozedur wird geändert in einen Eintrag R, mit dem markiert wird, daß eine Prozedur in Ausführung, bzw. erledigt ist. Diese Markierung signalisiert den aktiven Prozessoren, die in die Aufgabensteuerungstabelle schauen, daß sie diese Parallel-Prozedur bei ihrem Schleifendurchlauf überspringen, d. h. nicht aufrufen sollen.

Eine Einzelaufgabe vom Typ WFE stellt einen Synchronisationspunkt SynP dar. Die Parameter zu dieser Prozedur sind in der Aufgabensteuerungstabelle in einer Spalte mit dem Namen SynM abgespeichert. Ein Element dieser Spalte stellt eine Datenstruktur dar, die eine Liste von allen Prozduren beinhaltet, die beendet werden müssen, bevor die nächsten Prozeduren aufgerufen werden können. Diese Datenstruktur wird als Synchronisiermaske SynM bezeichnet.

Jeder Prozessor, der einen Synchronisationspunkt erreicht, überprüft, ob alle in der Synchronisiermaske aufgelisteten Prozeduren bereits ausgeführt sind. Er entnimmt diese Information einer sogenannten Prozessortabelle, die im gemeinsamen Speicher des Systems liegt und weiter unten näher erläutert wird.

Ein Prozessor, der einen Synchronisationspunkt erreicht hat, überprüft des weiteren, ob ein anderer Prozessor während der Ausführung einer der in der Synchronisiermaske enthaltenen Prozeduren ausgefallen ist. Die unterbrochene Prozedur wird dann durch den überprüfenden Prozessor erneut vollständig ausgeführt. Der zu einem derartigen Ausfall gehörige Ablauf wird ebenfalls weiter unten näher erläutert.

Wenn kein Prozessor ausgefallen ist, und wenigstens noch ein anderer Prozessor dabei ist, eine Prozedur auszuführen, die in der Synchronisiermaske angegeben ist, muß ein an einem Synchronisationspunkt angelangter Prozessor warten, bis alle Prozeduren beendet sind. Derjenige Prozessor, der die letzte Prozedur der Synchronisiermaske beendet hat, ändert den Eintrag WFE in den Eintrag GON und sendet eine Fortsetzungsnachricht zu allen aktiven Prozessoren, die beinhaltet, daß diese ihren Wartezustand beenden sollen und die Initialisierung des Multiprozessorsystems fortsetzen sollen.

Bei der erfindungsgemäßen Abarbeitung eines Aufgabenpakets muß sichergestellt werden, daß jede Aufgaben-Prozedur tatsächlich ausgeführt wird, sogar dann, wenn ein Prozessor während der Bearbeitung einer Aufgaben-Prozedur ausfällt. Um diese Feststellung anderen Prozessoren zu ermöglichen, muß jeder Prozessor den Namen derjenigen Prozedur, die er gerade bearbeitet, in ein ihm zugeordnetes Datenfeld der obengenannten Prozessortabelle im gemeinsamen Speicher schreiben.

Figur 2 zeigt eine Prozessortabelle PT, die zur Behandlung von Prozessorausfällen dient und die bezüglich jedes Prozessors MP ein Informationsfeld RT und ein Informationsfeld BI beinhaltet. Bevor ein Prozessor eine Prozedur ausführt, trägt er den Namen dieser Prozedur in das Informationsfeld RT seiner Datenstruktur-Zeile der Prozessortabelle ein. Wenn ein Prozessor eine Teilaufgabe einer Parallel-Prozedur aufruft, dann wird in die Prozessortabelle zusätzlich zum Namen der Parallel-Prozedur noch der Startindex in das Informationsfeld BI der Prozessortabelle eingetragen. Dies erfolgt mit Hilfe eines ununterbrechbaren Befehls gleichzeitig mit der Inkrementierung des Startindexes NI in der Aufgabensteuerungstabelle. Das Abholen einer Einzel- bzw. Teilaufgabe und das Eintragen in die Prozessortabelle geschieht somit simultan. Dadurch sind Zugriffe von anderen Prozessoren während dieses Vorgangs nicht möglich.

Sobald die aktuelle Prozedur eines Prozessors beendet ist, werden die Einträge in seinen Informationsfeldern durch Initialisierungswerte "FIN" und "0" überschrieben.

Jeder Prozessor, der einen Synchronisationspunkt erreicht, muß, wie bereits erwähnt, herausfinden, ob alle Prozeduren, die in der korrespondierenden Synchronisiermaske aufgelistet sind, bereits ausgeführt sind. Er erhält diese Information, indem er die Einträge in der Prozessortabelle überprüft.

Außerdem hat ein Prozessor an einem Synchronisationspunkt, wie ebenfalls bereits erwähnt, zu überprüfen, ob ein anderer Prozessor während der Ausführung einer Prozedur der Synchronisiermaske ausgefallen ist. Um diese Überprüfung zu ermöglichen, ist der Ausfall eines Prozessors in der sicherungstechnischen Datenbases des Systems für alle Prozessoren auslesbar gespeichert. Stellt ein Prozessor bei dieser Überprüfung fest, daß eine Prozedur in der Synchronisiermaske noch nicht beendet ist und der zu dieser Prozedur in der Prozessortabelle eingetragene Prozessor ausgefallen ist, so führt der überprüfende Prozessor diese Prozedur anstelle des ausgefallenen Prozessors erneut durch. Hierzu überträgt er die Informationen aus den Informationsfeldern des defekten Prozessors in seine eigenen Informationsfelder innerhalb der Prozessortabelle und trägt anschließend in die Informationsfelder des ausgefallenen Prozessors die Initialisierungswerte ein. Falls die Aufgabe, die wiederholt werden muß, eine Teilaufgabe einer Parallel-Prozedur ist, muß die Information über den Startindex dieser Teilaufgabe ebenfalls aus dem Informationsfeld des defekten Prozessors übernommen werden. Der Endindex wird dadurch berechnet, daß der überprüfende Prozessor in die Aufgabensteuerungstabelle schaut, und den diesbezüglichen Bereichsindex addiert.

Ein endloses Warten eines an einem Synchronisationspunkt angelangten Prozessors könnte durch eine Endlosschleife in einer Initialisierungsprozedur oder durch einen Ausfall desjenigen Prozessors, der die Fortsetzungsnachricht senden sollte verursacht werden. Um in einem solchen Ausnahmefall ein endloses Warten zu vermeiden, wird der Vorgang des Wartens durch einen Timer überwacht. Diese Überwachung wird ausschließlich von einem bestimmten Prozessor, einem sogenannten Masterprozessor MPM, durchgeführt. Bevor der an einem Synchronisationspunkt angelangte Masterprozessor bezüglich der Fortsetzungsnachricht in einen Wartezustand übergeht, setzt er einen Timer. Wenn der Timer abgelaufen ist, wiederholt der Masterprozessor die Überprüfung der Prozessortabelle. Falls dort eine Prozedur noch als "in Ausführung" markiert ist und kein Prozessor ausgefallen ist, setzt der Masterprozessor den Timer ein weiteres Mal. Wenn der Masterprozessor während dieser Zeitspanne keine Fortsetzungsnachricht empfängt, wird das Setzen des Timers so oft wiederholt, bis die längstmögliche Laufzeit einer Initialisierungsprozedur vergangen ist. Wenn diese Zeitspanne abgelaufen ist, ohne daß der Masterprozessor eine Fortsetzungsnachricht empfangen hat, wird eine entsprechende Fehlermeldung vom Masterprozessor abgegeben. Daraufhin entfernt der Masterprozessor die noch immer nicht ausgeführte Prozedur aus der Prozessortabelle, und zwar ohne sie zu wiederholen, da sie eine Endlosschleife enthalten könnte. Außerdem wird in der Aufgabensteuerungstabelle am Synchronisationspunkt unter der Spalte TYP der Wert GON eingetragen und die Fortsetzungsnachricht an die übrigen Prozessoren MP1, ..., MPn gesandt. Daraufhin wird die Abarbeitung des Aufgabenpaketes fortgesetzt.

**Patentansprüche**

1. Multiprozessorsystem mit

a) einer Aufgabensteuerungstabelle (TCT) im gemeinsamen Speicher des Systems, in der ein Aufgabenpaket in Einzelaufgaben zerlegt eingetragen ist,

b) einem Zusatzeintrag zu jeder Einzelaufgabe, durch den jeweils angegeben wird, ob eine Einzelaufgabe bereits ausgeführt, in Bearbeitung oder noch unbearbeitet ist,

c) Prozessoren zur Abarbeitung des Aufgabenpakets, die sich aus der Aufgabensteuerungstabelle jeweils die nächste freie Aufgabe zur Bearbeitung abholen,

d) Synchronisationspunkten (SynP) innerhalb der Aufgabensteuerungstabelle zur Koordinierung der Abarbeitung des Aufgabenpakets, die jeweils auf eine Serie von Einträgen mit unabhängigen Einzelaufgaben folgen und an denen die Prozessoren mit dem Abholen der nächsten freien Aufgabe warten müssen, bis die durch den Synchronisationspunkt festgelegten Bedingungen erfüllt sind.

2. Multiprozessorsystem nach Anspruch 1,
   **dadurch gekennzeichnet**
   daß

   a) derjenige Prozessor, der die letzte an einem Synchronisationspunkt geforderte Bedingung bearbeitet, nach Beendigung dieser Bearbeitung eine Fortsetzungsnachricht an die am Synchronisationspunkt wartenden Prozessoren sendet,

   b) ein Master-Prozessor (MPM) den korrekten Ablauf an einem Synchronisationspunkt überwacht, indem er einen Überwachungstimer setzt, sobald er an einem Synchronisationspunkt angekommen ist und, falls der Überwachungstimer abläuft, ohne daß er eine Fortsetzungsnachricht erhält, zum einen eine entsprechende Fehlermeldung ausgibt und zum anderen eine Fortsetzungsnachricht zu den übrigen Prozessoren sendet.

3. Multiprozessorsystem nach Anspruch 1 oder 2,
   **gekennzeichnet durch**
   Parallel-Prozeduren zur Bearbeitung langer Einzelaufgaben, die mehrmals von verschiedenen Prozessoren jeweils mit unterschiedlichen Parametern (NI, IR) aufrufbar sind, wobei die genannten Parameter aus der Aufgabensteuerungstabelle (TCT) entnehmbar sind.

4. Multiprozessorsystem nach Anspruch 3,
   **gekennzeichnet durch**
   eine Initialisierungsprozedur (TCTI) zur dynamischen Initialisierung der Aufgabensteuerungstabelle, die den Bereichsparameter (IR) einer Parallel-Prozedur in Abhängigkeit von der Größe der Parallel-Prozedur und der Zahl der zur Verfügung stehenden Prozessoren berechnet.

5. Verfahren zur Abarbeitung eines Aufgabenpakets in einem Multiprozessorsystem nach einem der Ansprüche 1 bis 4, demgemäß

a) von einem Prozessor bei Erreichen eines Synchronisationspunktes überprüft wird, ob alle in dem Synchronisationspunkt genannten Prozeduren ausgeführt sind,
b) bei einer als noch in Ausführung erkannten Prozedur überprüft wird, ob der ausführende Prozessor ausgefallen ist,
c) bei einem Ausfall des ausführenden Prozessors die Prozedur von dem überprüfenden Prozessor wiederholt wird.

## Claims

1. Multiprocessor system having

a) a task control table (TCT) in the common memory of the system, in which table a task package is entered, broken down into individual tasks,
b) an additional entry for each individual task, which in each case indicates whether an individual task has already been carried out, is being processed or has not yet been processed,
c) processors for processing the task package, which in each case retrieve from the task control table the next free task for processing,
d) synchronization points (SynP) within the task control table for coordinating the processing of the task package, which in each case follow a series of entries with independent individual tasks and for which the processors must wait before retrieving the next free task, until the conditions defined by the synchronization point are satisfied.

2. Multiprocessor system according to Claim 1, characterized in that

a) that processor which is processing the last condition required at a synchronization point transmits, after completing this processing, a continuation message to the processors which are waiting at the synchronization point,
b) a master processor (MPM) monitors the correct sequence at a synchronization point, in that it sets a monitoring timer as soon as it arrives at a synchronization point and, when the monitoring timer is running without receiving a continuation message, on the one hand emits an appropriate fault message and on the other hand transmits a continuation message to the other processors.

3. Multiprocessor system according to Claim 1 or 2, characterized by
parallel procedures for processing long individual tasks, which can be called up more than once by different processors using different parameters (NI, IR) in each case, in which case the said parameters can be taken from the task control table (TCT).

4. Multiprocessor system according to Claim 3, characterized by
an initialization procedure (TCTI) for dynamic initialization of the task control table, which procedure calculates the range parameter (IR) of a parallel procedure as a function of the size of the parallel procedure and of the number of available processors.

5. Method for processing a task package in a multiprocessor system according to one of Claims 1 to 4, in accordance with which

a) on reaching a synchronization point, one processor checks whether all the procedures quoted in the synchronization point have been carried out,
b) if a procedure is identified as still being carried out, this processor checks whether the processor carrying out this procedure has failed,
c) if the processor carrying out this procedure has failed, the procedure is repeated by the checking processor.

## Revendications

1. Système multiprocesseur comprenant :

a) un tableau de commande de tâches (TCT) qui est situé dans la mémoire commune du système et dans lequel un paquet de tâches est enregistré en étant décomposé en tâches individuelles,
b) pour chaque tâche individuelle, un enregistrement supplémentaire, qui indique respectivement si une tâche individuelle est déjà exécutée, est en cours de traitement ou est encore non traitée,
c) des processeurs, pour le traitement du paquet de tâches, qui vont chercher dans le tableau de commande de tâches respectivement la prochaine tâche libre afin de l'exécuter,
d) des points de synchronisation (SynP), situés à l'intérieur du tableau de commande de tâches et destinés à la coordination du traitement du paquet de tâches, qui font suite respectivement à une série d'enregistrements avec des tâches individuelles indépendantes et auxquels les processeurs doivent attendre, avant d'aller chercher la prochaine tâche libre, jusqu'à ce que les conditions fixées par le point de synchronisation soient remplies.

2. Système multiprocesseur selon la revendication 1, caractérisé par le fait que

a) le processeur qui traite la dernière condition exigée à un point de synchronisation envoie, après la fin de ce traitement, un message de poursuite aux processeurs attendant au point de synchronisation,

b) un processeur maître (MPM) contrôle le déroulement correct des opérations à un point de synchronisation en déclenchant un temporisateur de contrôle dès qu'il arrive à un point de synchronisation et, si la temporisation de contrôle est écoulée sans qu'un message de poursuite ait été reçu, d'une part en délivrant un message d'erreur correspondant et d'autre part en envoyant un message de poursuite aux autres processeurs.

3. Système multiprocesseur selon la revendication 1 ou 2, caractérisé par des procédures parallèles qui sont destinées au traitement de longues tâches individuelles et qui peuvent être appelées plusieurs fois par divers processeurs ayant respectivement des paramètres (NI, IR) différents, lesdits paramètres pouvant être pris dans le tableau de commande de tâches (TCT).

4. Système multiprocesseur selon la revendication 3, caractérisé par une procédure d'initialisation (TCTI), qui est destinée à l'initialisation dynamique du tableau de commande de tâches et qui calcule le paramètre de zone (IR) d'une procédure parallèle en fonction de la taille de la procédure parallèle et du nombre des processeurs disponibles.

5. Procédé pour le traitement d'un paquet de tâches dans un système multiprocesseur selon l'une des revendications 1 à 4, dans lequel

a) un processeur qui atteint un point de synchronisation contrôle si toutes les procédures indiquées dans le point de synchronisation ont été exécutées,

b) dans le cas d'une procédure reconnue comme étant encore en traitement, ce processeur contrôle alors si le processeur exécutant est en panne ou non,

c) dans le cas d'une panne du processeur exécutant, le processeur effectuant le contrôle répète la procédure concernée.

## FIG 1

TCT

| TASK | TYP | SynM oder | | |
|---|---|---|---|---|
| | | NI | MI | IR |
| TCTI<br>CP11<br>CP12<br>CP13<br>........ | R<br>R<br>R<br>R<br>... | | | |
| SynP1 | WFE | ( : CP11 , CP12 : ) | | |
| CP21<br>CP22<br>CP23<br>CP24 | R<br>R<br>R<br>P | 1025<br>127 | 1024<br>576 | 32<br>18 |
| SynP2 | WFE | ( : CP13 , CP21 : ) | | |
| CP31<br>CP32<br>.......... | S<br>P<br>........ | 1 | 4032 | 126 |
| SynP3 | WFE | ( : CP23 , ...... : ) | | |
| ..........<br>........... | ........<br>....... | | | |
| FIN | WFE | ( : all CPxy : ) | | |

## FIG 2

PT

| MP | RT | BI |
|---|---|---|
| MPM<br>MP1<br>MP2<br>MP3<br><br>MPn | CP21<br>FIN<br>CP24<br>CP24<br><br>FIN | 0<br>0<br>91<br>109<br><br>0 |